Europäisches Patentamt

European Patent Office

Office européen des brevets

(19)

(11) Numéro de publication : **0 050 822**
**B1**

(12) **FASCICULE DE BREVET EUROPÉEN**

(45) Date de publication du fascicule du brevet :
**17.07.85**

(21) Numéro de dépôt : **81108537.2**

(22) Date de dépôt : **20.10.81**

(51) Int. Cl.⁴ : **G 01 N   1/00**, **G 01 M   3/20**,
**H 01 J  49/04**

(54) Vanne pour le prélèvement d'un gaz.

(30) Priorité : **24.10.80 FR 8022775**

(43) Date de publication de la demande :
**05.05.82 Bulletin 82/18**

(45) Mention de la délivrance du brevet :
**17.07.85 Bulletin 85/29**

(84) Etats contractants désignés :
**AT BE CH DE FR GB IT LI LU NL SE**

(56) Documents cités :
**FR-A- 2 036 488**
**GB-A- 1 170 463**
**US-A- 3 227 872**
**US-A- 3 751 880**
**US-A- 3 867 631**

(73) Titulaire : **COMPAGNIE INDUSTRIELLE DES TELE-COMMUNICATIONS CIT-ALCATEL S.A. dite:**
**12, rue de la Baume**
**F-75008 Paris (FR)**

(72) Inventeur : **Tallon, Jacques**
**1, Place St-François**
**F-74000 Annecy (FR)**

(74) Mandataire : **Weinmiller, Jürgen et al**
**Zeppelinstrasse 63**
**D-8000 München 80 (DE)**

## Description

La présente invention concerne une vanne pour le prélèvement à une pression faible d'un gaz d'un mélange gazeux, ladite vanne comprenant un corps de vanne muni d'une entrée pour le mélange, d'une sortie de pompage et d'un orifice de prélèvement, et un clapet coopérant avec le corps de vanne et situé entre ledit orifice et l'entrée, et pouvant prendre une première position dans laquelle il laisse passer directement le mélange de l'entrée vers l'orifice de prélèvement.

On sait que dans les techniques du vide et notamment dans le contrôle d'étanchéité d'enceintes par gaz traceur, tel que l'hélium ou l'hydrogène, et spectromètre de masse, il est nécessaire de mettre en œuvre une vanne apte à effectuer un prélèvement gazeux dudit gaz traceur dans l'enceinte contenant un mélange gazeux dont la pression peut varier dans une gamme de valeurs étendue soit de $10^{-4}$ millibar à quelques bars.

On sait qu'on peut effectuer des prélèvements de gaz sans difficultés pour des pressions du mélange inférieures à 1 millibar. Au-delà, il y a des risques de détérioration du spectromètre. Pour faire des prélèvements lorsque la pression du mélange est supérieure à 1 millibar, on dispose, en parallèle sur la vanne principale, une vanne réglable dont on règle l'ouverture en fonction de la pression régnant en amont.

Une telle vanne réglable est par exemple décrite dans le document GB-A- 1 170 463. Elle comporte un disque rotatif qui est muni de plusieurs ouvertures de dimensions variables et qui est positionné angulairement par rapport à des conduits d'entrée et de sortie de telle sorte qu'un passage adéquat vers le spectromètre pour une pression amont donnée soit assuré. Une vanne similaire où le disque est remplacé par un piston est décrite dans le document US-A-3 227 872.

Cependant, une telle vanne est d'une structure relativement compliquée et elle est susceptible de s'obturer facilement. L'invention a pour but de concevoir une vanne de prélèvement d'une construction simple et fiable, capable d'effectuer le prélèvement d'un gaz ayant une gamme étendue de pressions, entre la pression qui est directement admise par le spectromètre et une pression de quelques bars.

Ce but est atteint par la vanne telle qu'elle est définie dans la première revendication.

L'invention a pour objet aussi un dispositif suivant la revendication 7.

Il est à noter ici qu'on connaît déjà, par exemple à partir des documents US-A- 3 867 631 et US-A-3 751 880, des membranes semiperméables qui servent à transférer un gaz traceur tel que l'hélium à un analyseur tout en bloquant d'autres gaz tel que l'air.

L'invention est précisée par la description de plusieurs modes de réalisation en référence au dessin annexé dans lequel :

La figure 1 est une vue en coupe axiale d'une vanne de prélèvement selon l'invention, du type à translation.

La figure 2 est une vue en coupe axiale d'une vanne de prélèvement selon l'invention, du type papillon.

La figure 3 est une vue en coupe axiale d'une vanne de prélèvement selon l'invention, du type cylindrique ou boule.

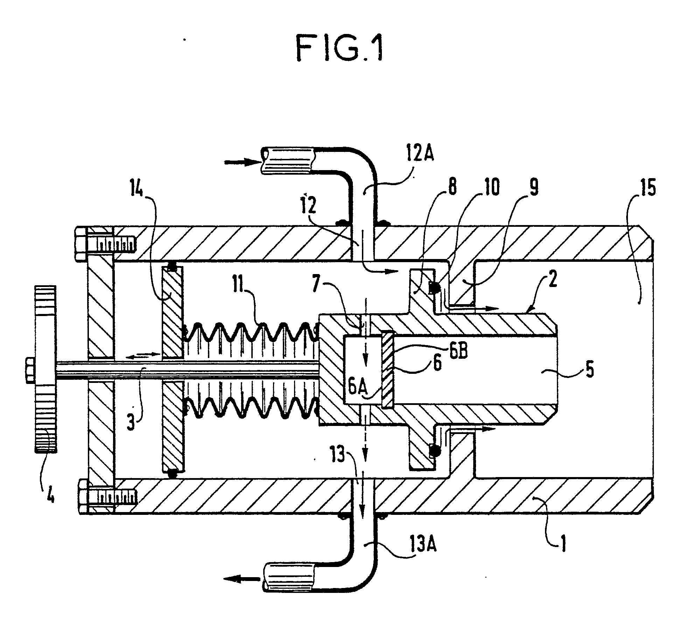

La figure 1 représente une vanne de prélèvement de gaz selon l'invention, comportant un corps 1 cylindrique, à l'intérieur duquel un clapet 2 peut être entraîné en translation au moyen d'une tige 3 reliée à un organe de commande 4, qui peut être manuel, électrique ou pneumatique.

Ledit clapet 2 est creux et comporte une cavité cylindrique interne 5 dans laquelle est logée une membrane semi-perméable 6 ayant deux faces 6A et 6B. Des orifices 7 ménagés en amont de la membrane 6 (côté 6A) mettent en communication la portion de la cavité 5 en amont de la membrane avec l'intérieur du corps 1.

Par ailleurs, ledit clapet comporte une bride circulaire 8 en regard d'un épaulement ou siège 9 solidaire de la paroi du corps 1, ladite bride étant munie d'un joint d'étanchéité torique 10.

Le clapet 2 est lié à l'une des extrémités d'un soufflet 11 dont l'autre extrémité est assujettie à une bride d'étanchéité 14.

La vanne comprend une entrée 12, une sortie 13 et un orifice de prélèvement 15.

Dans le cas où la vanne est utilisée pour le contrôle de l'étanchéité d'une enceinte, au moyen d'un gaz traceur tel que l'hélium, l'entrée 12 est reliée à ladite enceinte par une canalisation 12A ; la sortie 13 est alors reliée, par une canalisation 13A, à un groupe de pompage (non représenté) ; enfin l'orifice de prélèvement 15 est relié à un analyseur tel qu'un spectromètre de masse de type connu (non représenté).

Une telle vanne fonctionne de la façon suivante :

Lorsque la pression des gaz débouchant dans le corps 1 par l'intermédiaire de la canalisation 12A est inférieure à 1 millibar environ, on ouvre la vanne par action sur l'organe de commande 4 ; la vanne se trouve en position ouverte comme représenté dans la figure 1.

Le mélange de gaz est alors dirigé directement vers l'analyseur par l'intermédiaire de l'orifice 15 de la partie avant du corps 1. Le spectromètre peut alors détecter la présence du gaz traceur.

Par contre lorsque la pression des gaz est supérieure à 1 millibar environ, on déplace en translation le clapet 2 au moyen de l'organe de commande 4 lié à la tige 3, de sorte que la bride 8 vienne porter de façon étanche contre l'épaulement 9 interdisant ainsi tout passage direct des gaz vers l'analyseur. Le mélange de gaz emprunte alors les orifices 7 pour atteindre la sortie 13A. La membrane 6 est confectionnée en un matériau dont la perméabilité gazeuse varie selon la nature des gaz, de sorte qu'elle ne laisse diffuser que le gaz traceur, l'hélium en l'occurrence, tout en arrêtant partiellement les autres gaz. Un tel matériau est par exemple à base de polyamide ou de polytétrafluoréthylène. Le gaz traceur est alors dirigé vers l'analyseur, les gaz résiduels tels que l'air étant aspirés par le groupe de pompage, par l'intermédiaire de la canalisation 13A.

La vanne de prélèvement selon l'invention permet donc d'effectuer des prélèvements de gaz dans une gamme de pressions étendue car sa conductance qui est de l'ordre de 10 litres/seconde à pleine ouverture n'est que de $10^3$ litres/seconde pour un prélèvement de gaz à 1 millibar de pression.

Elle trouve des applications avantageuses dans la technique du vide en général et notamment dans le contrôle d'étanchéité par gaz traceur.

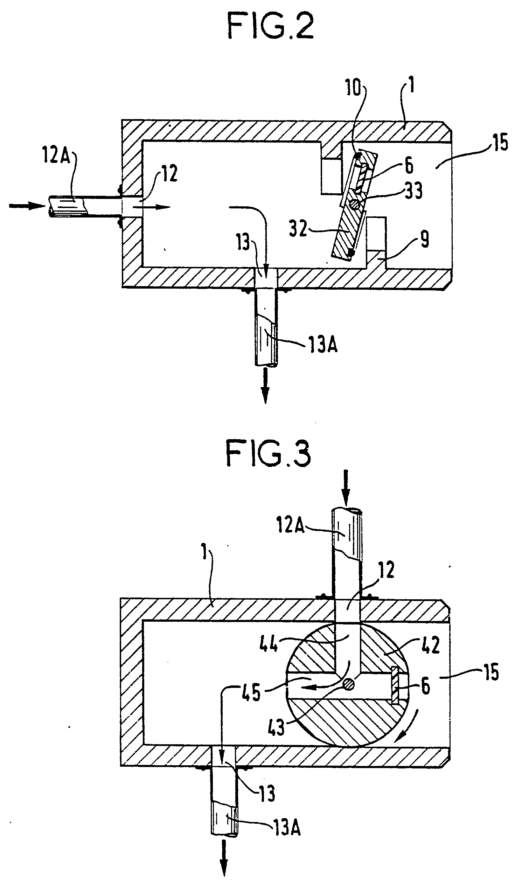

La figure 2 représente une variante de réalisation dans laquelle le clapet est remplacé par un papillon 32 tournant autour d'un arbre 33. Les éléments communs aux figures 1 et 2 ont reçu les mêmes numéros de référence. Le fonctionnement est le même que précédemment.

La figure 3 représente une autre variante dans laquelle le clapet est un cylindre 42, tournant autour d'un arbre 43 passant par son axe longitudinal.

Le cylindre est traversé par deux canalisations 44 et 45 concourantes ; la canalisation 45 comporte une membrane semi-perméable 6.

Le fonctionnement de la vanne est le même que pour les réalisations des figures 1 et 2.

En variante, le cylindre est remplacé par une sphère tournant autour d'un diamètre et comportant les mêmes canalisations. La représentation en coupe de la vanne est la même que celle de la figure 3.

## Revendications

1. Vanne pour le prélèvement à une pression faible d'un gaz d'un mélange gazeux, ladite vanne comprenant un corps (1) de vanne muni d'une entrée (12) pour le mélange, d'une sortie (13) de pompage et d'un orifice de prélèvement (15), et un clapet, (2, 32, 42) coopérant avec le corps de vanne et situé entre ledit orifice de prélèvement et l'entrée, et pouvant prendre une première position dans laquelle il laisse passer directement le mélange de l'entrée vers l'orifice de prélèvement, caractérisée en ce que le clapet comporte une membrane semiperméable (6) ayant une première face (6A) communiquant avec ladite entrée et une seconde face (6B) communiquant avec ledit orifice de prélèvement, le clapet pouvant prendre une seconde position dans laquelle il obture l'orifice de prélèvement par suite d'un actionnement par un organe de commande (4) manuel, électrique ou pneumatique, lorsque la pression du mélange est supérieure à une pression donnée, le gaz à prélever traversant alors ladite membrane semiperméable.

2. Vanne selon la revendication 1, caractérisée en ce que le clapet (2) est déplaçable en translation dans le corps (1) de vanne et que, dans ladite seconde position, il prend appui de façon étanche contre un épaulement (9) dudit corps de vanne.

3. Vanne selon la revendication 1, caractérisée en ce que le clapet est un papillon (32) mobile en rotation.

4. Vanne selon la revendication 1, caractérisée en ce que le clapet est un cylindre (42) mobile autour de son axe longitudinal, muni de canaux (44, 45) concourants dont l'une comporte ladite membrane.

5. Vanne selon la revendication 1, caractérisée en ce que le clapet est une sphère tournant autour d'un diamètre, muni de canaux concourants dont l'un comporte ladite membrane.

6. Vanne selon la revendication 1, caractérisée par le fait que ledit gaz diffusant à travers ladite membrane (6) est l'hélium ou l'hydrogène.

7. Dispositif et notamment dispositif de contrôle d'étanchéité par gaz traceur comportant une vanne selon l'une des revendications précédentes.

## Claims

1. A valve for low-pressure sampling of a gas from a gaseous mixture, said valve comprising a valve body (1) with an inlet (12) for the mixture, a pumping outlet (13) and a sampling outlet orifice (15), and comprising a flap (2, 32, 42) which cooperates with the valve body and is situated between said sampling orifice and the inlet, and being able to assume a first position in which it allows the mixture to pass directly from the inlet towards the sampling orifice, characterized in that the flap includes a semi-permeable diaphragm (6) with a first surface (6A) which communicates with said inlet and a second surface (6B) which communicates with said sampling orifice, the flap being able to assume a second position in which it closes the sampling orifice due to a command by a manual, electric or pneumatic control means (4) when the pressure of the mixture is higher than a given pressure, the gas to be sampled then passing through said semi-permeable diaphragm.

2. A valve according to claim 1, characterized in that the flap (2) is movable in translation in the valve body (1) and that in said second position, it bears tightly against a shoulder (9) of said valve body.

3. A valve according to claim 1, characterized in that the flap is a rotatable butterfly valve (32).

4. A valve according to claim 1, characterized in that the flap is a cylinder (42) which is movable about its longitudinal axis and has intercommunicating ducts (44, 45), one of which contains said diaphragm.

5. A valve according to claim 1, characterized in that the flap is a sphere which rotates about a diameter and has intercommunicating ducts, one of which contains said diaphragm.

6. A valve according to claim 1, characterized in that said gas diffusing through said diaphragm (6) is helium or hydrogen.

7. A device, and in particular a device for checking the gas thightness by use of a tracer gas, comprising a valve according to any of the preceding claims.

**Patentansprüche**

1. Ventil zur Entnahme eines Gases einer gasförmigen Mischung bei niedrigem Druck, wobei das Ventil einen Ventilkörper (1) mit einem Eingang (12) für die Mischung, einem Pumpausgang (13) und einer Entnahmeöffnung (15) und eine Klappe (2, 32, 42) aufweist, die mit dem Ventilkörper zusammenwirkt und zwischen der Entnahmeöffnung und dem Eingang angeordnet ist und die eine erste Stellung einnehmen kann, in der sie direkt die Mischung vom Eingang zur Entnahmeöffnung strömen läßt, dadurch gekennzeichnet, daß die Klappe eine halbdurchlässige Membran (6) aufweist, von der eine erste Oberfläche (6A) mit dem Eingang und eine zweite Oberfläche (6B) mit der Entnahmeöffnung in Verbindung steht, wobei die Klappe eine zweite Stellung einnehmen kann, in der sie die Entnahmeöffnung nach einer Betätigung durch ein manuelles, elektrisches oder pneumatisches Steuerorgan (4) verschließen kann, wenn der Druck der Mischung höher als ein gegebener Druck ist, worauf das zu entnehmende Gas die halbdurchlässige Membran durchquert.

2. Ventil nach Anspruch 1, dadurch gekennzeichnet, daß die Klappe (2) im Ventilkörper (1) translatorisch verschiebbar ist und daß sie in der zweiten Stellung in dichter Weise an einer Schulter (9) des Ventilkörpers anliegt.

3. Ventil nach Anspruch 1, dadurch gekennzeichnet, daß die Klappe eine drehbare Schmetterlingsklappe (32) ist.

4. Ventil nach Anspruch 1, dadurch gekennzeichnet, daß die Klappe ein um seine Längsachse beweglicher Zylinder (42) ist, der mit aufeinanderstoßenden Kanälen (44, 45) ausgestattet ist, von denen einer die Membran aufweist.

5. Ventil nach Anspruch 1, dadurch gekennzeichnet, daß die Klappe eine um einen Durchmesser drehende Kugel ist, die mit aufeinanderstoßenden Kanälen ausgestattet ist, von denen einer die Membran aufweist.

6. Ventil nach Anspruch 1, dadurch gekennzeichnet, daß das durch die Membran (6) diffundierende Gas Helium oder Wasserstoff ist.

7. Vorrichtung und insbesondere Vorrichtung zur Dichtheitskontrolle mittels Prüfgas, die ein Ventil gemäß einem der vorstehenden Ansprüche aufweist.

# FIG.1

# FIG.2

# FIG.3